# EUROPEAN PATENT APPLICATION

(11) **EP 2 590 072 A1**
(43) Date of publication of application: **08.05.2013**
(21) Application number: 10854077.4
(22) Date of filing: 30.06.2010
(51) Int. Cl.: G06F 9/445, G06F 12/16

(54) **SYSTEM CONTROL DEVICE, INFORMATION PROCESSING SYSTEM, AND DATA MIGRATION AND RESTORATION METHOD FOR INFORMATION PROCESSING SYSTEM**

(71) Applicant: Fujitsu Limited, Kawasaki-shi, Kanagawa 211-8588 (JP)
(72) Inventor: KOBAYASHI Tomohiro, Kawasaki-shi Kanagawa 211-8588 (JP)
(74) Representative: HOFFMANN EITLE
(86) International application number: PCT/JP2010/061152
(87) International publication number: WO 2012/001780

(57) **Abstract**

A system controller (1), which saves and restores data in a volatile memory (29A) in processing device (2A, 2B), is provided a non-volatile memory (12A) for provisional data and a non-volatile memory (12C) in a non-volatile area. The system controller (1) once saves the data in the non-volatile memory (12A) for the provisional data, and stores the data in the non-volatile memory (12A) for the provisional data to the non-volatile memory (12C) for formal data when it is found that the processing device (2A, 2B) has started by the provisional data in the non-volatile memory (12A) at a time of restoration. Therefore, even an abnormality occurs in the communication path or the memory for provisional data occurs the abnormality, it can be prevented to restore by incorrect saved data.

## Description

### TECNICAL FIELD

The embodiments discussed herein are related to a system controller, an information processing system and a method of saving and restoring data in the information processing system.

### BACKGROUND ART

With faster processing and a large-scale of an information processing system, the information processing system is adopted a configuration in which a plurality of processing units operates in parallel. The information processing system indudes a system control unit that performs system control of each processing unit.

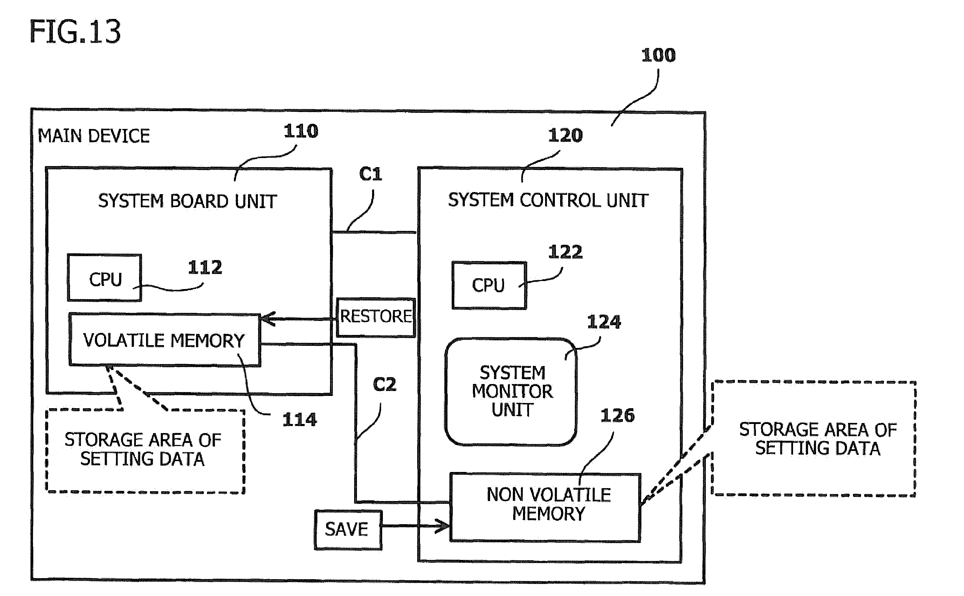

FIG. 13 is a block diagram of a conventional information processing system. The information processing system 100 includes a system board unit 110 and a system control unit 120. The system board unit 110 mounts CPU (Central Processing Unit) 112 and configures a server device in the information processing system. The system control unit 120 mounts a CPU (processor) 122. The CPU 122 in the system control unit 120 runs system monitoring program (mechanism) and controls the entire system including hardware that configure the server device 110.

The system control unit 120 performs functions of power on/off, monitoring of a device error, a log, a report, a maintenance guidance and communication of OS (Operating System) of a hardware unit that configure the server device 110 via a control line C1.

In the system configuration, an operator is able to change setting data that are necessary to start the server device 110. For example, run the boot program, an information processing system, which executes UNIX (registered trademark) as OS, runs boot program and starts the OS. Setting value for startup of the OS has been set to a default value. On the other hand, the operator sets the other setting values. The other setting values are stored in volatile area (setting area) 114 of a memory on the system board unit 110.

In order that the system board unit 110 stores the other setting values in the volatile area so as to change the setting values, it is necessary to save the other setting value when power is shut off and to restore the other setting value to the volatile area 114 when the power is turned on. The system monitoring mechanism 124 in the system control unit 120 performs the save and restore of data of setting values.

In other words, when the power is shut off, etc., the system monitoring mechanism 124 in the system control unit 120 reads the setting value data in the volatile area 114 of the memory in the system board unit 110 through a connection line C2, and stores the data in a non-volatile memory region 126. In addition, when the power is turned on, the system monitoring mechanism 124 in the system control unit 120 reads the setting value data from the non-volatile area (storage area) 126 in the memory and writes the data in the volatile area (setting area) 114 in the memory in the system board unit 110. Thus, the setting value data is restored.

### [Related art]

### [Patent Document]

[Patent Document 1] Japanese Laid-on Patent Publication No. 5-265720
[Patent Document 2] Japanese Laid-on Patent Publication No. 6-309234

### SUMMARY OF THE INVENTION

### PROBLEM TO BE SOLVED BY THE INVENTION

The setting data which is a target of the restore are only binary data for the system monitoring mechanism which is a control side. Further, the boot program of the server device 110 has a mechanism to check the setting value of the startup of the server when performing the setting. However, such a checking mechanism often has not been publicly disposed.

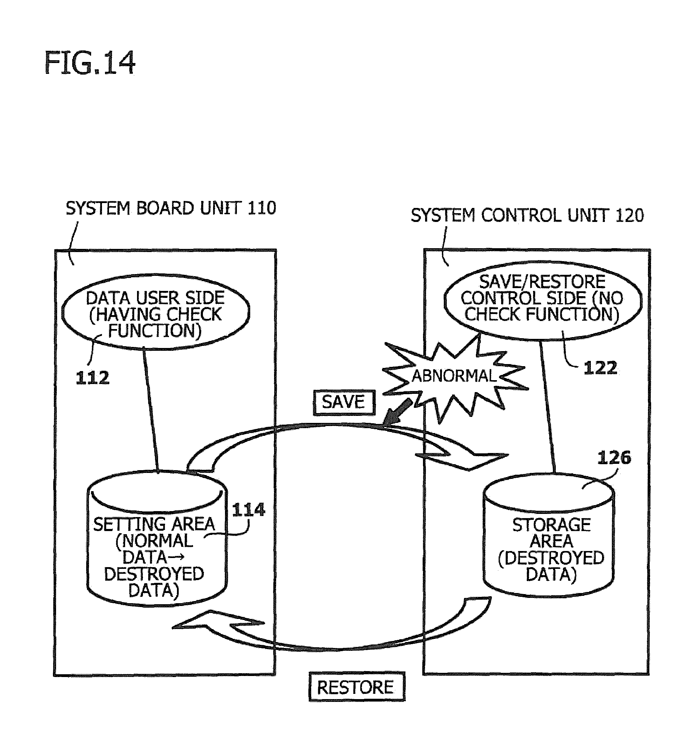

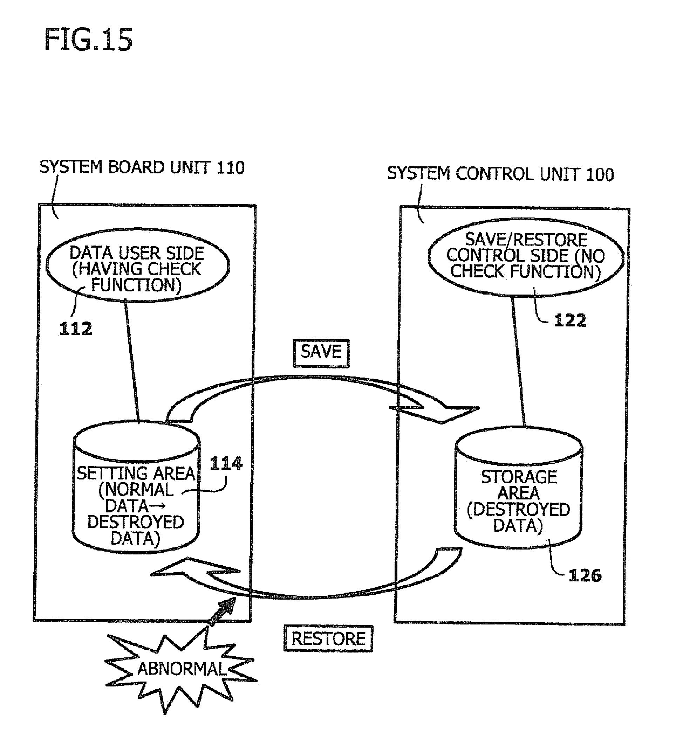

FIG. 14 and FIG. 15 are explanatory diagrams of a problem in the save/restore data. As illustrated in FIG. 14, when the system monitoring mechanism 122 saves the data from the setting area 114 in the system board unit 110, there is a case that the received data will be damaged when a hardware abnormality has occurred in a fixed manner or intermittently in the data communication path. When the permanent or intermittent hardware abnormality occurs, the damaged data due to the hardware abnormality would be saved in the data storage area 126. And, at a next time, when restoring the saved data and starting the server by the restored data, the start of the server is no longer possible.

As illustrated in FIG. 15, when the system monitoring mechanism 122 restores the data from the storage area 126 to the setting area 114 in the system board unit 110, there is a case that the restored data will be damaged when a hardware abnormality has occurred in a fixed manner or intermittently in the data communication path. When the permanent or intermittent hardware abnormality occurs, the damaged data due to the hardware abnormality would be restored in the setting area 114. And when starting the server by the restored data, the start of the server is no longer possible.

In addition, the check mechanism of the boot program in the server 110 checks the validity of the variable value at the time of power-on. However, this check mechanism, when the data of the setting area 114 is determined to be abnormal, initializes the data in the setting area 114. Because the data in the setting area 114 is initialized, it is necessary that the operator resets the data and instructs the system startup.

An object of the present invention is to provide a system controller, an information processing system and a method of saving and restoring data in the information processing system which correctly restore the saved data even though a fixed or an intermittent failure occurred in a data communication path between a processor and a system controller.

### Means for Solving the Problems

According to an aspect of the embodiments, an information processing system includes a processing device that performs a startup process according to data in a volatile memory, and a system control device which is connected to the processing device and receives the data in the volatile memory, saves the data in a non-volatile memory, transmits the data in the non-volatile memory to the processing device and restores the data in the volatile memory. And the system controller device includes a first non-volatile which holds the received data, a second non-volatile memory and a processing unit which restores the data of the first non-volatile memory in the volatile memory, starts the processing device and stores the data in the first non-volatile memory into the second volatile memory according to a success notification of the startup from the processing device.

Further, according to another aspect of the embodiments, a system controller which is connected to a processing device that performs a startup process according to data in a volatile memory and receives the data in the volatile memory, saves the data in a non-volatile memory, transmits the data in the non-volatile memory to the processing device and restores the data in the volatile memory, includes a first non-volatile which holds the received data, a second non-volatile memory and a processing unit which restores the data of the first non-volatile memory in the volatile memory, starts the processing device and stores the data in the first non-volatile memory into the second volatile memory according to a success notification of the startup from the processing device.

In addition, according to the other aspect of the embodiments, a method of saving and restoring data in the information processing system includes receiving data in the volatile memory of a processing device that performs a startup process according to the data in the volatile memory, saving the data in a first non-volatile memory, restoring the data in the first non-volatile memory to the volatile memory at a restore, starting the processing device by the restored data and storing the data in the first non-volatile memory into the second volatile memory according to a success notification of the startup from the processing device.

### Affect of the Invention

A non-volatile memory area in the system controller has a first save memory for provisional data and a second save memory for formal data, the data is once saved to the first non-volatile memory and the data in the first non-volatile memory is stored to the second non-volatile memory when the processing device successful starts by the data in the first non-volatile memory during a restore. Therefore, it is possible to prevent the restore by the saved data which was damaged even though abnormality occurs in the communication path or in the first non-volatile memory.

### BRIEF DESCRIPTION OF DRAWINGS

FIG. 1 is a block diagram of an information processing system according to an embodiment;
FIG. 2 is a block diagram of a configuration for saving and restoring data in FIG. 1;
FIG. 3 is a flow diagram of data saving according to the embodiment;
FIG. 4 is an explanation diagram of an operation of saving process in FIG. 3;
FIG. 5 is an explanatory diagram of the operation of the saving in the event of failure of the data communication path in FIG. 3;
FIG. 6 is an explanatory diagram of the operation of the saving when the first non-volatile memory is abnormal in FIG. 3;
FIG. 7 is an explanatory diagram of the operation of the saving in the event of failure of the system board in FIG. 3;
FIG. 8 is a flow diagram of first restoration process according to an embodiment;
FIG. 9 is a flow diagram of second restoration process according to an embodiment;
FIG. 10 is an explanatory diagram of data restoration operation in Fig. 8 and FIG. 9;
FIG. 11 is an explanatory diagram of a data restoration operation in the event of failure of the data communication path in FIG. 8 and FIG. 9;
FIG. 12 is an explanatory diagram of a data restoration operation in the event of failure of the first non-volatile memory in FIG. 8 and FIG. 9;
FIG. 13 is a block diagram of a conventional information processing system;
FIG. 14 is an explanatory diagram of one problem in a conventional data save/restore; and
FIG. 15 is an explanatory diagram of another problem in the conventional data save/restore.

### MODE FOR CARRYING OUT THE INVENTION

Hereinafter, embodiments will be described in the order of an information processing system, data saving process, data restoration process, and the other embodiment, but the disclosed configuration of an information processing system is not limited to the embodiment.

### (Information processing system)

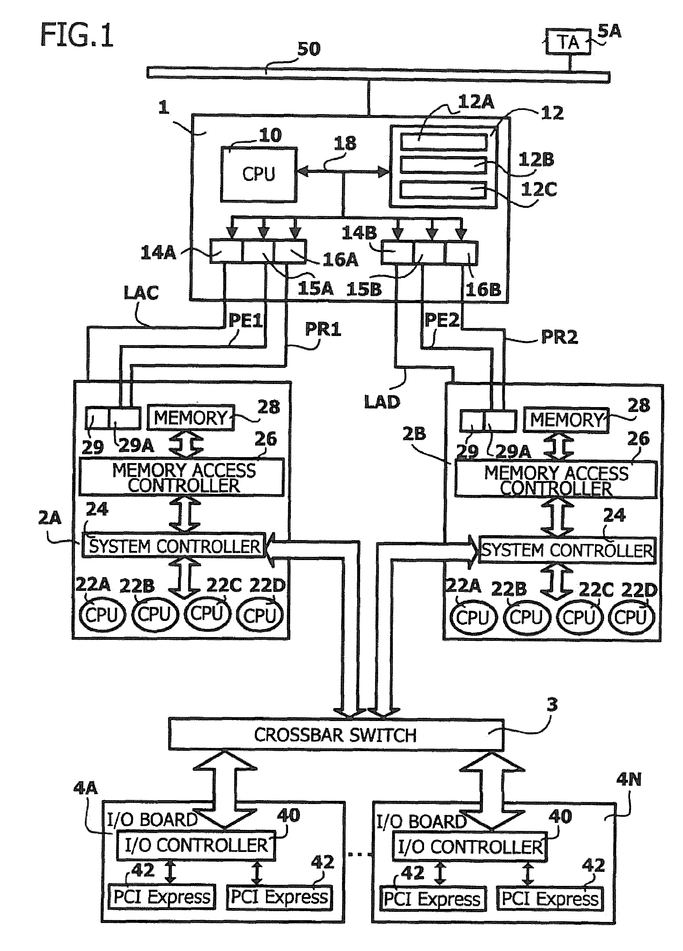

FIG. 1 is a block diagram of the information processing system according to the embodiment. FIG. 1 illustrates an example of the information processing system in which a single system controller performs system control of a plurality of processing devices. As illustrated in FIG. 1, the processing device includes system board units 2A and 2B. Each of the system board units 2A and 2B is consisted of a CPU/memory board. The system board unit (hereinafter referred to as system board) 2A and 2B includes a plurality of processing units (CPU: Central Processing Unit) 22A, 22B, 22C and 22D, the system controller 24, a memory access controller 26, a host memory 28 and a memory for control 29. In this example, four processing units (hereinafter referred to as CPU) are provided in the system boards 2A and 2B. Even in the singular, the number of CPU which are mounted in the system boards 2A and 2B may be a single or other plural number.

Each of the CPU 22A ~ 22D connects to the system controller 24. The system controller 24 connects to the memory access controller 26 which is connected to the host memory 28. The system controller 24 connects to a plurality of I/O (Input/Output) boards 4A ~ 4N through a crossbar switch 3.

The I/O boards 4A ~ 4N includes a I/O controller and a plurality of PCI (Peripheral Component Interconnect) Express slots 42. An external memory (a large capacity memory and/or a storage device) and a network interface card (NIC) are connected to the PCI Express slots 42. The system controller 24 performs transfer control between the CPU 22A ~ 22D and the memory access controller 26 and between the crossbar switch 3 and the CPU22A ~ 22D and the memory access controller 24. The crossbar switch 3 directly connects the system boards 2A to the system board 2B and connects the system boards 2A and 2B to the I/O board 4A ~ 4N one by one.

By the crossbar switch 3, it is possible to speed up the transfer of data between the system boards 2A and 2B and between the system boards 2A and 2B and the I/O boards 4A ~ 4N. In the example of FIG. 1, the information processing system has been mounted two system boards, but the system may be equipped with single or other multiple board units.

The memory 29 for control is a storage unit that stores control programs and data for the system boards 2A and 2B. For example, the memory 29 for control includes a non-volatile memory for storing boot program, etc. and a volatile memory 29A that stores data including a setting value.

The system control device 1 performs monitoring of operations and various setting of the system boards 2A and 2B via control lines LAC and LAD. For example, the system controller (hereinafter referred to as system control device) performs power on/off of the hardware units that configures the system boards 2A and 2B, an abnormality monitoring / a log collection / a report log of the system boards 2A and 2B, a maintenance guidance and communication with OS (Operating System).

Further, the system control device 1 connects to the volatile memory 29A of the memory 29 in the system board 2A via a first signal line PE1 and a second signal line PR1, and connects to the volatile memory 29A of the memory 29 in the system board 2B via a third signal line PE2 and a fourth signal line PR2.

The system control device 1 includes a processing unit (CPU: Central Processing Unit) 10, a storage unit 12, a first interface circuit group 14A, 15A, 16A for communication with the system board 2A, a second interface circuit group 14B, 15B, 16B for communication with the system board 2B, and a communication bus 18 which connects to these circuits.

The first interface circuit group 14A, 15A, 16A include a control interface circuit 14A which executes monitoring operation and various setting of the system board 2A via the control line LAC and a pair of signal interface circuits 15A and 16A which connect to the volatile memory 29A of the memory 29 in the system board 2A via the first signal line PE1 and the second signal line PR1.

The second interface circuit group 14B, 15B, 16B include a control interface circuit 14B which executes monitoring operation and various setting of the system board 2B via the control line LAD and a pair of signal interface circuits 15B and 16B which connect to the volatile memory 29A of the memory 29 in the system board 2B via the first signal line PE2 and the second signal line PR2.

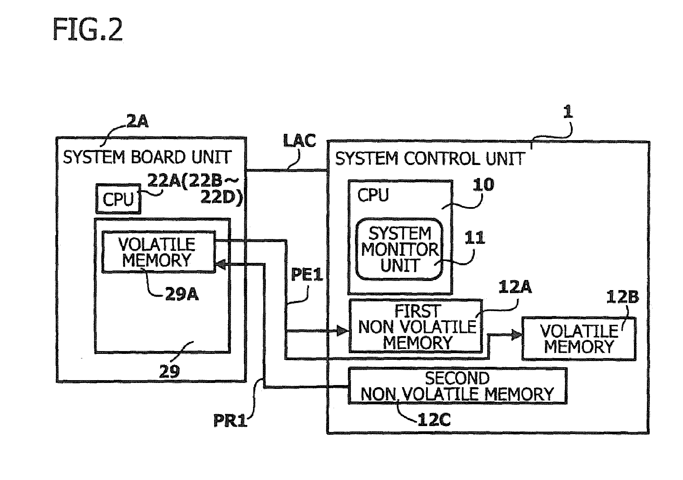

The storage unit 12 includes a first non-volatile memory 12A, a second non-volatile memory 12C and a volatile memory 12B. As will be described below with FIG. 2, the first non-volatile memory 12A and the second non-volatile memory 12C has a data storage area of the setting value. The volatile memory 12B has a comparison area.

The system control device 1 connects to a terminal device 5A via a communication path 50. For example, the terminal device 5A is composed of a personal computer having a monitor and an input device. An operator operates the terminal device 5A and instructs the hardware control to the system control device 1. For example, the system control device 1 executes the power-on sequence, the initialization sequence process, the termination sequence.

It is desirable to use LAN (Local Area Network) as the communication path, for example. The terminal device 5A connects to the communication path 50 and rewrites the setting values in the volatile memory 29A in the system boards 2A and 2B via the system control device 1 according to an operation of a user (operator).

For example, in the information processing system which use UNIX (registered trademark) for the OS, Open Boot PROM (boot program) starts Solaris operating system (hereinafter referred to as OS) conforming to IEEE1275 standard. The operator performs the change of setting value by eeprom command under the OS. The setting data that has changed is referred to as OBP (Open Boot Prom) environment variables. By executing the Open Boot PROM, the OBP environment variables are used to set the environment OS. The setting data is written in the volatile memory 29A in the system boards 2A and 2B.

As the OBP environment variable, setting of the boot device, the setting range of security and diagnostic level, etc. are known. For example, the boot device can be set to "disk" and "nest". The Open Boot PROM (boot program) has a default value of the OBP environment variable, and changed value of the OBP environment variable is stored in the volatile memory 29A.

FIG 2 is an explanatory diagram illustrating a relationship between the system control device 1 and the memory in the system board 2A. In addition, in FIG. 2, the interface circuit group 14A, 15A, 16A of FIG. 1 has been omitted. The CPU10 in the system control device 1 includes a system monitoring mechanism (program) 11 for performing monitoring and controlling of the system boards 2A and 2B. The system monitoring mechanism 11 executes saving and restoring of setting values in the volatile memory 29A on the system board 2A.

The volatile memory 29A in the system board 2A connects to the system control device 1 by a pair of signal lines PE1 and PR1. It is preferable that a pair of signal lines PE1 and PR1 is constituted of signal lines in JTAG (Joint Test Action Group) standard.

The first non-volatile memory 12A in the system control device 1 consists of save area for provisional data, and the second non-volatile memory 12C consists of save area for formal data. The system monitoring mechanism reads the setting data in the volatile memory 29A on the system board 2A to the first non-volatile memory 12A and the volatile memory 12B through the signal line PE1.

There are two cases of saving of the setting value in the volatile memory 29A. The first case is a case that the saving request command is dispatched to the system monitoring mechanism 11 when the operator instructs data change of the setting value (executing of eeprom command on the OS). The second case is a case where the system monitoring mechanism 11 itself determines and executes when the system power is shut down.

As will be described later, the setting data in the volatile memory 29A on the system board 2A is held in the first non-volatile memory 12A via a signal line PE1, as the provisional data. Then, when it was found during the restoration that the system board 2A could start by the provisional data held in the first non-volatile memory 12A, the provisional data in the first nonvolatile memory 12A is stored to the second non-volatile memory as the formal data.

In addition, at the time of restoration, the system board 2A is started by the provisional data in the first non-volatile memory 12A. When the system board 2A failed to start by the provisional data of the first non-volatile memory 12A, restoration is performed by the formal data in the second non-volatile memory 12C.

Furthermore, at the time of restoration, when the provisional data in the first non-volatile memory 12A does not match with the comparison data in the volatile memory 12B, the provisional data in the first non-volatile memory 12A is not used for restoration and the start of the system board 2A is tried by the formal data in the second non-volatile memory 12C.

The system monitoring mechanism 11, when the system is powered on, performs to determine the trigger to restore the data of the setting.

In this way, the storage area of the non-volatile memory 12A in the system control device 1 change the position for the provisional data, and the non-volatile memory 12C is newly added for formal data. That is, the system control device 1 has two saving storage area (non-volatile memory) 12A and 12C. Further, in order to organize the redundant of the communication paths, the path (route) PE1 between the volatile memory 29A in the system board 2A and the first non-volatile memory 12A in the system control device 1 is separately provide from the path (route) PR1 between the volatile memory 29A in the system board 2A and the second non-volatile memory 12C in the system control device 1.

In addition, in order to enhance the checking of the data read during the saving, the volatile memory 12B is provided for the comparison area. The system monitoring mechanism 11 compares the provisional data in the first non-volatile memory 12A with the data written in the volatile memory 12B for comparison area, and detects a match or mismatch of the data.

### (Data saving process)

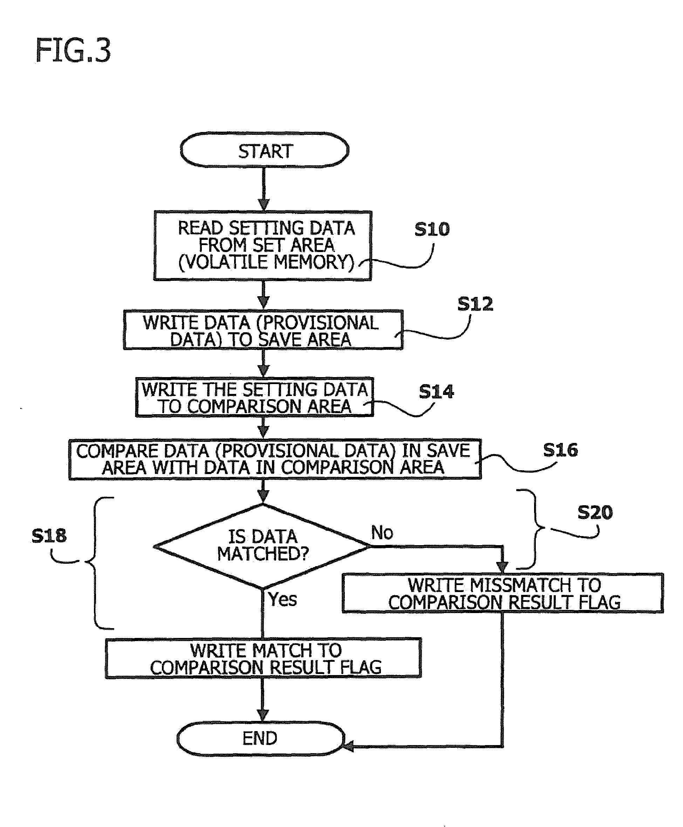

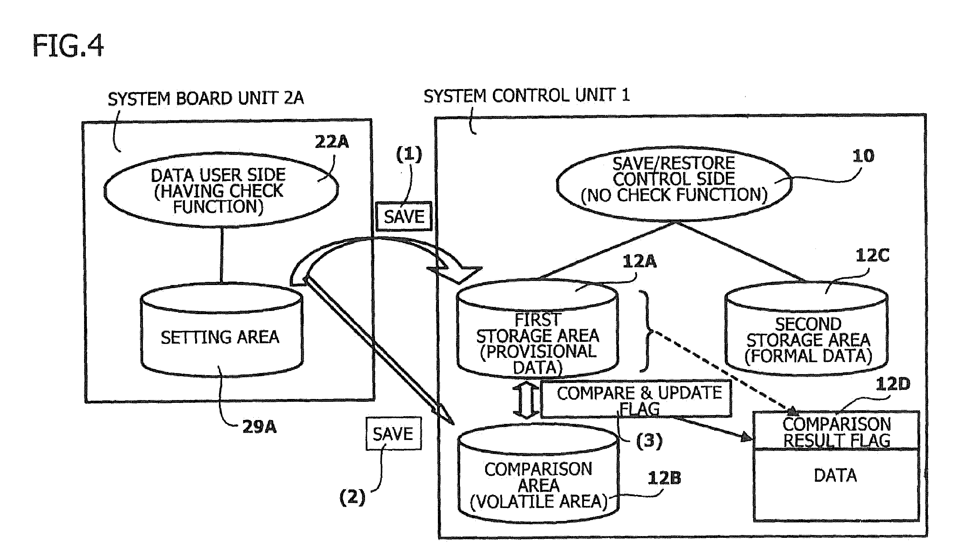

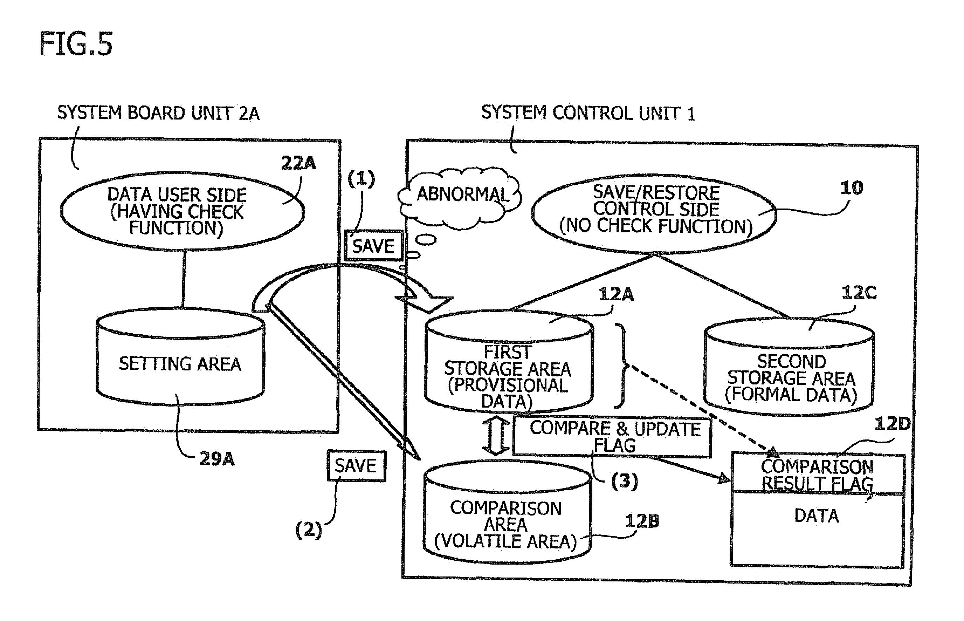

FIG. 3 is a flow chart of data saving process in the system monitoring mechanism according to the embodiment. FIG. 4 is a diagram for explaining the operation of the data saving process in FIG. 3. FIG. 5, FIG. 6 and FIG. 7 are diagrams for explaining the operation of the data saving process at power down in FIG. 3. In FIG. 3, same elements as those depicted in FIG. 1 and FIG. 2 are indicated by the same symbols.

(S10) The system monitoring mechanism 11 in the system control device 1 reads the setting values in the volatile memory 29A (called as setting area) to the interface circuit 15A via one of the pair of paths (for example, path PE1) at a triggered by saving data.

(S12) The system monitoring mechanism 11 writes the setting values read to the interface circuit 15A to the storage area of the first non-volatile memory 12A, as the provisional data (as indicated by (1) in FIG. 4).

(S14) The system monitoring mechanism 11 writes the setting values read to the interface circuit 15A to the volatile memory 12B, as the comparison data (as indicated by (2) in FIG. 4).

(S16) The system monitoring mechanism 11 compares the data saved in the first non-volatile memory 12A with the data saved in the volatile memory 12B (as indicated by (3) in FIG. 4).

(S18) The system monitoring mechanism 11, when the comparison result between the data saved in the first non-volatile memory 12A and the data saved in the volatile memory 12B indicates a match, writes the match to a comparison result flag (table) provided in the first non-volatile memory 12A (as indicated by (3) in FIG. 4).

(S20) The system monitoring mechanism 11, when the comparison result between the data saved in the first non-volatile memory 12A and the data saved in the volatile memory 12B indicates a mismatch, writes the mismatch to a comparison result flag (table) provided in the first non-volatile memory 12A (as indicated by (3) in FIG. 4).

In this way, when saving the data, the saved data is stored as the provisional data, and is not stored as the formal data. In other words, when saving the data, the saved data is stored in the first non-volatile memory 12A and is not stored in the second non-volatile memory 12C.

FIG. 5 illustrates an explanation diagram of the operation when the data is damaged (destroyed) in the data communication path PE1 during saving data. When it is fixed that the data is damaged in the data communication path PE1 (including the interface circuit 15A), abnormal data is written to both of the first non-volatile memory 12A (provisional data storage area) and the volatile memory (comparison area) 12B.

On the other hand, the abnormal data is not written to the second non-volatile memory (formal data storage area) 12 C. In other words, the second non-volatile memory 12B is not updated with the abnormal data. As will be described later, when the next data restoration, the system monitoring mechanism 11 restores the formal data in the second non-volatile memory 12C into the volatile memory 29A on the system board 2A via the communication path PR1. For this reason, the start (boot) of the system is success.

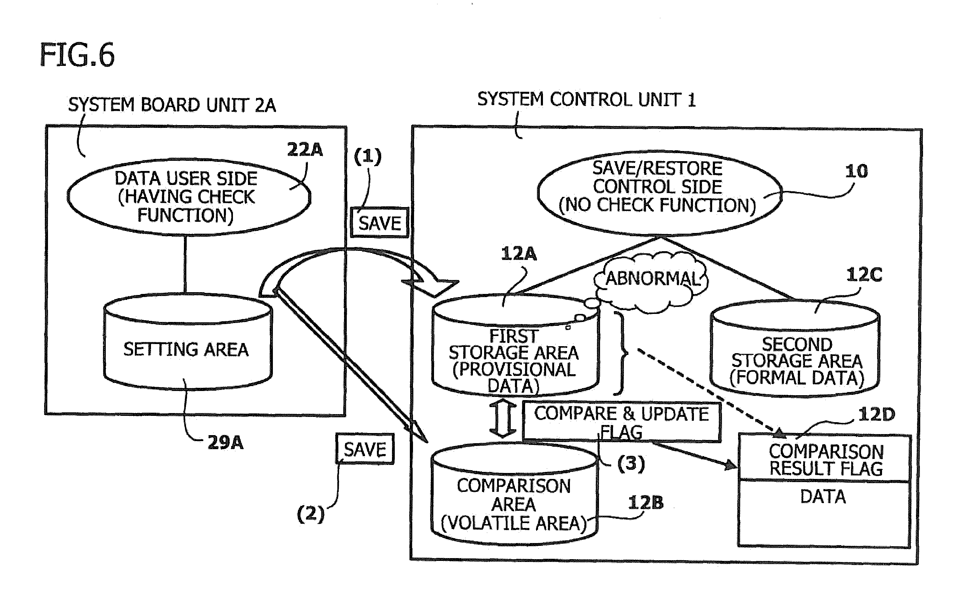

FIG. 6 illustrates an explanation diagram of the operation when the data is damaged (destroyed) due to status of data abnormal in the storage area of the first non-volatile memory 12A during saving data. The system monitoring mechanism 11 compares the provisional data saved in the first non-volatile memory 12A with the data saved in the volatile memory 12B. Therefore, the system monitoring mechanism 11 is able to detect the damage of the data due to a failure of the first non-volatile memory 12A. That is, the data is not correctly written into the first non-volatile memory 12A, but the data is written correctly into the volatile memory 12B.

When the system monitoring mechanism 11 compares the provisional data saved in the first non-volatile memory 12A with the data saved in the volatile memory 12B and detects the mismatch, the system monitoring mechanism 11 records the "mismatch" in the comparison result flag 12D. Therefore, it is possible to prevent that the restoration is performed by the provisional data in the first non-volatile memory 12A at the time of startup. As described below, when restoring, the system monitoring mechanism 11 performs the restoration by the formal data in the second non-volatile memory 12C.

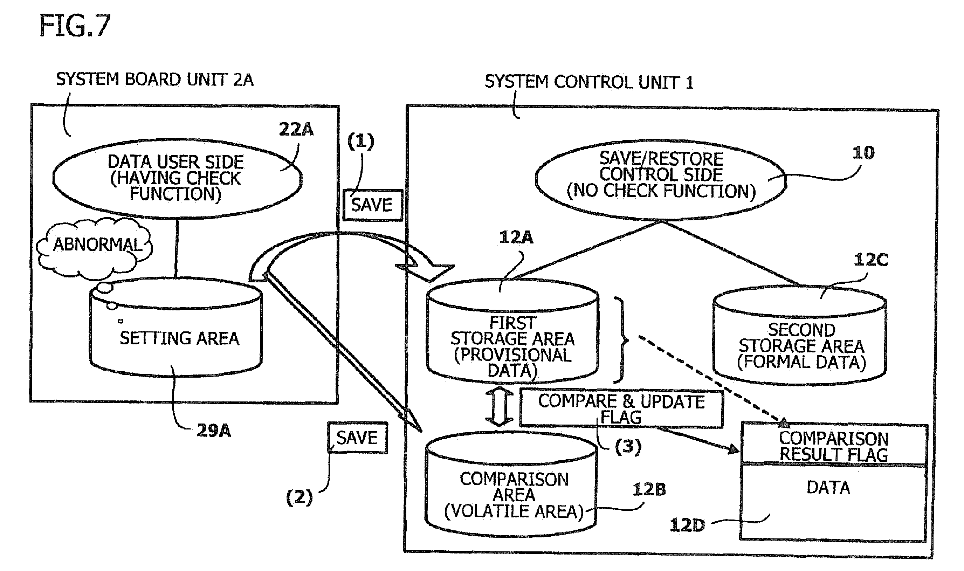

FIG. 7 illustrates an explanation diagram of the operation when the data abnormal status is occurred in the volatile memory 29A in the system board 2A during saving data of system power-off. When the data in the setting area of the volatile memory 29A was damaged during system operation, abnormal data is written to both of the first non-volatile memory 12A (provisional data storage area) and the volatile memory (comparison area) 12B due to data saving when power off of the system is occurred.

On the other hand, the abnormal data is not written to the second non-volatile memory 12C (formal data storage area). In other words, the second non-volatile memory 12B is not updated with the abnormal data. As described below, when the next system power-on, hardware failure is detected by the unit diagnosis of the system board, and the failed system board unit is replaced. At a time of the next data restoration, the system monitoring mechanism 11 restores the formal data in the second non-volatile memory 12C into the volatile memory 29A on the system board 2A via the communication path PR1. For this reason, the start (boot) of the system is success.

### (Data restore process)

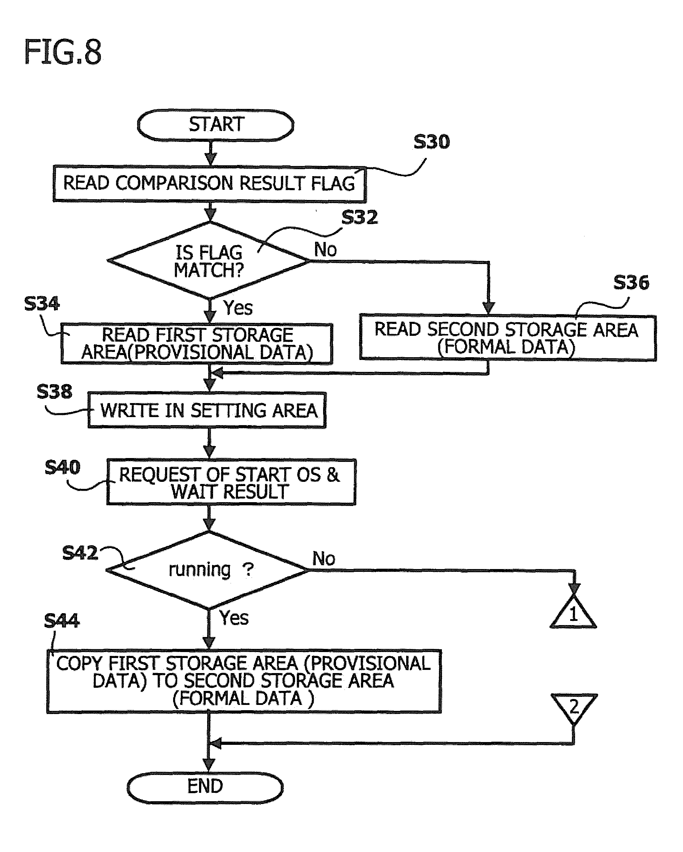

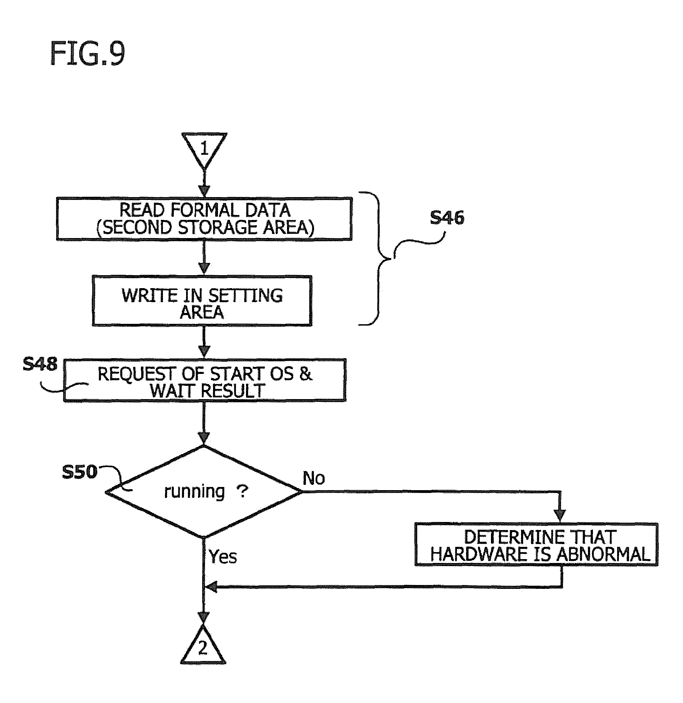

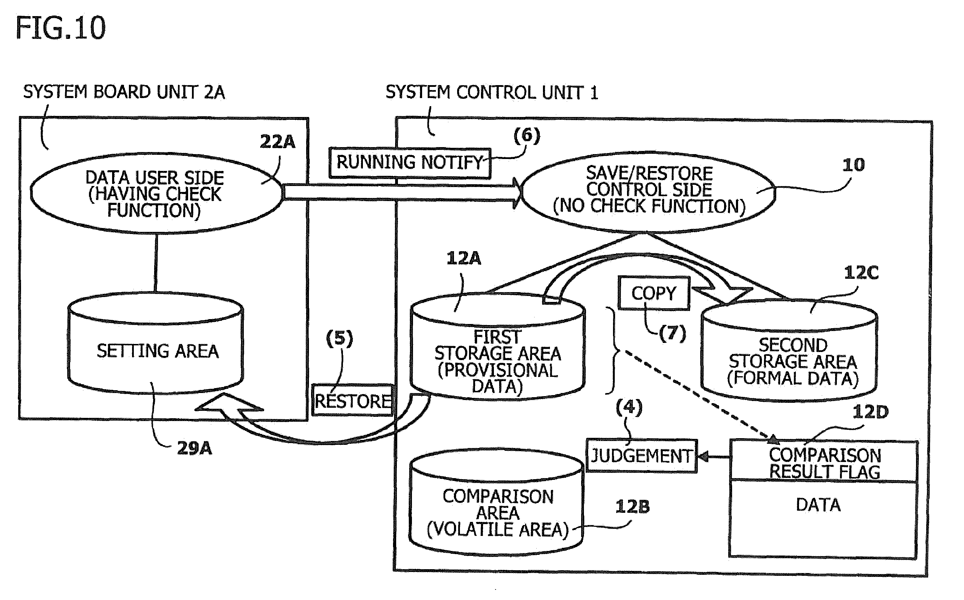

FIG. 9 is a flow diagram of the restoration processing of the system monitoring mechanism 11 according to the embodiment. FIG. 10 is a diagram for explaining the operation of the restoration process in FIG. 8 and FIG. 9.

(S30) The system monitoring mechanism 11 reads the comparison flag 12D as depicted by FIG. 10.

(S32) The system monitoring mechanism 11 determines whether the comparison flag 12D indicates a match (as depicted by (4) in FIG. 10).

(S34) The system monitoring mechanism 11, when it is determined that the comparison flag 12D indicates the match, determines that there is no abnormality of hardware of the storage area 12A (the provisional data) of the first non-volatile memory 12A. And the system monitoring mechanism 11 reads the provisional data from the first non-volatile memory 12A.

(S36) The system monitoring mechanism 11, when it is determined that the comparison flag 12D does not indicate the match, determines that there is abnormality of hardware of the storage area 12A (the provisional data) of the first non-volatile memory 12A. And the system monitoring mechanism 11 reads the formal data from the second non-volatile memory 12C.

(S38) The system monitoring mechanism 11 writes (copies) the provisional data or the formal data which was read into the volatile memory 29A in the system board 2A via the interface circuit 16A and the signal line PR1 (as depicted by (5) in FIG. 10).

(S40) The system board 2A has been powered up. The system monitoring mechanism 11 requests the start (boot) to the system board through 2A via the control line LAC. The system board 2A starts to boot using the setting value data that was copied to the volatile memory 29A. The system monitoring mechanism 11 waits to receive the result of the boot from the system board 2A via the control line LAC (as depicted by (6) in FIG. 10).

(S42) The system monitoring mechanism 11 determines whether or not the result of the boot is the start (running) notification (as depicted by (6) in FIG. 10).

(S44) The system monitoring mechanism 11, when it is determined that the result of boot from the system board 2A is successful start notification (running), writes (copies) the provisional data in the first non-volatile memory 12A into the second non-volatile memory 12C (as depicted by (7) in FIG. 10). Then, the restore process is completed.

(S46) The system monitoring mechanism 11, when it is determined that the result of boot from the system board 2A is not successful start notification (running) in step S42, reads the formal data in the second non-volatile memory 12C. The system monitoring mechanism 11 writes (copies) the formal data which was read into the volatile memory 29A in the system board 2A via the interface circuit 16A and the signal line PR1 (as depicted by (5) in FIG. 10).

The system monitoring mechanism 11 requests the start (boot) to the system board through 2A via the control line LAC. The system board 2A starts to boot using the setting value data that was copied to the volatile memory 29A. The system monitoring mechanism 11 waits to receive the result of the boot from the system board 2A via the control line LAC (as depicted by (6) in FIG. 10).

The system monitoring mechanism 11 determines whether or not the result of the boot is the start (running) notification (as depicted by (6) in FIG. 10). The system monitoring mechanism 11 completes the restore process when it is determined that the result of boot from the system board 2A is successful start notification (running). In contrary, the system monitoring mechanism 11, when it is determined that the result of boot from the system board 2A is not successful start notification (running), determines the hardware abnormality of the volatile memory 29A in the system board 2A. And the restore process completes.

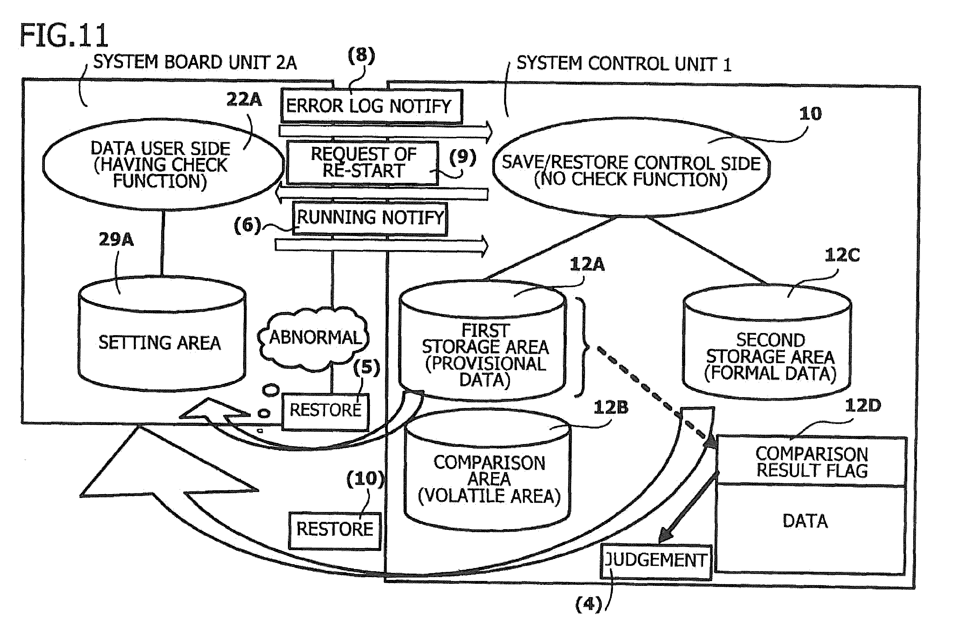

FIG. 11 is a diagram for explaining the operation when the data is damaged in the data communication path. The system monitoring mechanism 11 checks the comparison result flag 12D, recognizes as a "match", and determines that hardware error does not exist in the storage area (provisional data) in the first non-volatile memory 12A (as depicted by (4) in FIG. 11). The system monitoring system 11 restores using the provisional data in the first non-volatile memory 12A (as depicted by (11) in FIG. 11). The system monitoring system 11, when receiving the error log notification from the Open Boot PROM on the system board 2A, recognizes a failure of the system start-up (as depicted by (8) in FIG. 11).

The system monitoring system 11 again restores using the formal data in the second non-volatile memory 12C (as depicted by (10) in FIG. 11). The system monitoring system 11 requests a reboot to the Open Boot PROM in the system board 2A (as depicted by (9) in FIG. 11). The system monitoring system 11, when receiving the running notification from the Open Boot PROM on the system board 2A, recognizes a success of the system start-up (as depicted by (6) in FIG. 11).

In this way, even though there is a data error in the data communication path, and the start of the OS was failed by the provisional data in the first nonvolatile memory 12A, it is possible to restart the OS by using the formal data that has a proven of boot OS in the past in the second non-volatile memory 12C.

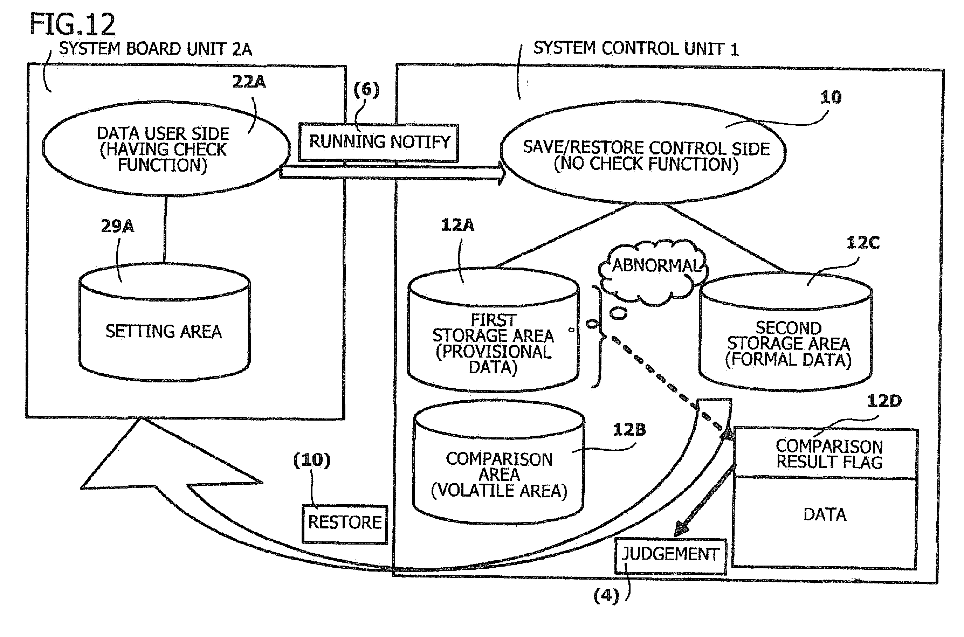

FIG. 12 is an explanatory diagram of a data restoration operation in an abnormal state of the data in the first non-volatile memory 12A. The system monitoring mechanism 11 checks the comparison result flag 12D, recognizes as a "mismatch", and determines that hardware error does not exist in the storage area (provisional data) in the first non-volatile memory 12A (as depicted by (4) in FIG. 12). The system monitoring system 11 restores using the formal data in the second non-volatile memory 12C (as depicted by (10) in FIG. 12). The system monitoring system 11, when receiving the running notification from the Open Boot PROM on the system board 2A, recognizes a success of the system start-up (as depicted by (6) in FIG. 12).

In this way, even if there is a failure of the first non-volatile memory 12A, 12C, it is possible to restore using the formal data in the second non-volatile memory 12C.

Furthermore, in FIG. 11, when the system monitoring mechanism 11 is notified again the error log from the system board 2A, it is possible that the system monitoring mechanism 11 identifies the failure of the volatile memory on the system board 2A, as described in step S50 of FIG. 9. In other words, it is possible to identify failure locations, and the system board 2A may be exchanged.

Also, the case of hardware failure of the volatile memory 29A, there is two cases. A first case is a case of failure of the hardware of the volatile memory 29A, and a second case is a case that failure data has been restored even though the hardware is normal. For the second case, the normal data has been lost even though the hardware is replaced. In the embodiment, when hardware fault is detected by the unit diagnosis unit of the system board at a power on, the system board unit is replaced. The system boot successes by the formal data by the same operation as in FIG. 11, when restoring data after the replacement.

In this way, the first non-volatile memory and the second first non-volatile memory are provided and the data that has proven to start the processing unit is stored in the second non-volatile memory. Thereby, even though the start of the processing unit failed by the provisional data in the first non-volatile memory, it is possible to try the start of the processing unit using the formal data in the second non-volatile memory.

In addition, when data failure caused by the hardware abnormality had occurred when restoring data, the data is initialized by the check function on the side to use the data. Therefore, in spite of holding the normal data in the system monitoring mechanism, it is necessary for the operator to reset the data of the system board unit side in order to start the processing unit. In the embodiment, even if the operator changes to incorrect setting value, it is possible to start the processing unit by using the formal data in the second non-volatile memory without resetting the value by the operator.

In addition, when the start of the processing unit is successful by restoring the provisional data in the first non-volatile memory, the provisional data in the first non-volatile memory is copied to the second non-volatile memory to update the formal data. Therefore, it is possible to store the setting value that are proven in the second non-volatile memory even if the operator changes the set value during operation.

The system control unit that controls the save/restore data has not checking function to ensure data. Or it may not be able to implement the check function such as a license. In this case, it is possible to ensure to store the normal data in the volatile memory (setting region) and the first and second non-volatile memories (save area). Therefore, it is possible to maintain the operation of the data processing unit.

### (Other embodiments)

In the embodiment described above in FIG. 11, the restoration process has been described by using the data restoration path PR1. However, when one of the data restoration paths occurred the abnormality, the restoration process may be performed by selecting normal data restoration path.

In addition, the abnormality of the data due to the failure of the first non-volatile memory 12A are detected by performing a comparison of the provisional data in the first non-volatile memory 12A with the data in the volatile memory 12B, thereby it prevents to restore by using the provisional data in the first non-volatile memory 12 A when starting. However, it is possible to omit the comparison process using the volatile memory.

In addition, the OS is not limited to UNIX, and can also be applied to other OS. And the setting value data is not limited to the OBP environment variable settings, and the setting value may be another setting value that is required to start the other OS. Further, although the example has been described in the setting of the OS, the saving and restoration can also be applied to other data and programs, such as.

The foregoing has described the embodiments of the present invention, but within the scope of the spirit of the present invention, the present invention is able to various modifications, and it is not intended to exclude them from the scope of the present invention.

### INDUSTRIAL APPLICABILITY

A non-volatile memory area in the system controller has a first save memory for provisional data and a second save memory for formal data, the data is once saved to the first non-volatile memory and the data in the first non-volatile memory is stored to the second non-volatile memory when the processing device successful starts by the data in the first non-volatile memory during a restore. Therefore, it is possible to prevent the restore by the saved data which was damaged even though abnormality occurs in the communication path or in the first non-volatile memory.

## Claims

1. An information processing system comprising:
a processing device that performs a startup process according to data in a volatile memory; and
a system control device which is connected to the processing device and receives the data in the volatile memory, saves the data in a non-volatile memory, transmits the data in the non-volatile memory to the processing device and restores the data in the volatile memory,
wherein the system controller device comprises:
a first non-volatile which holds the received data;
a second non-volatile memory; and
a processing unit that restores the data of the first non-volatile memory in the volatile memory, starts the processing device and stores the data in the first non-volatile memory into the second volatile memory according to a success notification of the startup from the processing device.

2. The information processing system according to claim 1, wherein the processing unit, according to an unsuccessful notification of the startup from the processing device by restoring the data of the first non-volatile memory in the volatile memory, restores the data held in the second non-volatile memory to the volatile memory and starts the processing device.

3. The information processing system according to claim 1, wherein the system control device further comprises a third memory that stores the received data,
and wherein the processing unit compares the data in the first non-volatile memory with data in the third memory and records a result of comparison when saving the data.

4. The information processing system according to claim 3, wherein the processing unit reads the result of comparison at a time of restoration, restores the data of the first non-volatile memory in the volatile memory when the result of comparison indicates a match, and restores the data held in the second non-volatile memory to the volatile memory when the result of comparison indicates a mismatch.

5. The information processing system according to claim 1, wherein the volatile memory in the processing device connects to the system control device via signal line of redundant configuration.

6. The information processing system according to claim 1, wherein the data held in the volatile memory of the processing device includes a setting value which is necessary for the startup of the processing device,
and wherein the processing device executes startup processing using the setting value in the volatile memory.

7. The information processing system according to claim 1, wherein the processing unit in the system control device monitors an operation of the processing device.

8. A system controller which is connected to a processing device that performs a startup process according to data in a volatile memory and receives the data in the volatile memory, saves the data in a non-volatile memory, transmits the data in the non-volatile memory to the processing device and restores the data in the volatile memory, the system controller comprising:
a first non-volatile memory which holds the received data;
a second non-volatile memory; and
a processing unit which restores the data of the first non-volatile memory into the volatile memory, starts the processing device and stores the data in the first non-volatile memory into the second volatile memory according to a success notification of the startup from the processing device.

9. The system controller according to claim 8, wherein the processing unit, according to an unsuccessful notification of the startup from the processing device by restoring the data of the first non-volatile memory in the volatile memory, restores the data held in the second non-volatile memory to the volatile memory and starts the processing device.

10. The system controller according to claim 8, wherein further comprises a third memory that stores the received data,
and wherein the processing unit compares the data in the first non-volatile memory with data in the third memory and records a result of comparison when saving the data.

11. The system controller according to claim 10, wherein the processing unit reads the result of comparison at a time of restoration, restores the data of the first non-volatile memory in the volatile memory when the result of comparison indicates a match, and restores the data held in the second non-volatile memory to the volatile memory when the result of comparison indicates a mismatch.

12. The system controller according to claim 8, wherein the volatile memory in the processing device connects to the system control device via signal line of redundant configuration.

13. The system controller according to claim 8, wherein the data held in the volatile memory of the processing device includes a setting value which is necessary for the startup of the processing device,
and wherein the processing device executes startup processing using the setting value in the volatile memory.

14. The system controller according to claim 8, wherein the processing unit in the system control device monitors an operation of the processing device.

15. A method of saving and restoring data in an information processing system having a processing device and a system control device, the method comprising:
receiving data in the volatile memory of a processing device that performs a startup process according to the data in the volatile memory by the system control device;
saving the data in a first non-volatile memory;
restoring the data in the first non-volatile memory to the volatile memory at a time of restoration;
starting the processing device by the restored data; and
storing the data in the first non-volatile memory into the second volatile memory according to a success notification of the startup from the processing device.

16. The method according to claim 15, wherein the method further comprises restoring the data held in the second non-volatile memory to the volatile memory and starts the processing device, according to an unsuccessful notification of the startup from the processing device by restoring the data of the first non-volatile memory in the volatile memory.

17. The method according to claim 15, wherein the method further comprises:
second saving the received data in a third memory of the system control device;
comparing the data in the first non-volatile memory with the data in the third memory; and
recording a result of comparison when saving the data.

18. The method according to claim 17, wherein the restoring comprises:
first restoring the data of the first non-volatile memory in the volatile memory when the result of comparison indicates a match; and
second restoring the data held in the second non-volatile memory to the volatile memory when the result of comparison indicates a mismatch.

19. The method according to claim 15, wherein the volatile memory in the processing device connects to the system control device via signal line of redundant configuration.

20. The method according to claim 15, wherein the starting comprises executing of the startup of the processing deice using a setting value which is necessary for the startup of the processing device in the volatile memory according to an instruction of the startup.
